# EUROPEAN PATENT APPLICATION

(11) **EP 1 225 585 A1**
(43) Date of publication of application: **24.07.2002**
(21) Application number: 02075116.0
(22) Date of filing: 10.01.2002
(51) Int. Cl.: G11B 33/04, G06K 19/077, G06K 19/07, G11B 23/30, G08B 13/24

(54) **CD comprising a transponder and a CD-box comprising a resonance circuit**

(30) Priority: 10.01.2001 NL 1017068
(71) Applicant: N.V. Nederlandsche Apparatenfabriek NEDAP, NL-7141 DE Groenlo (NL)
(72) Inventor: Hogen Esch, Johannes Harm Lucas, 7122 ZN Aalten (NL)
(74) Representative: Prins, Adrianus Willem

(57) **Abstract**

A transponder circuit for the purpose of a CD or DVD box (2) which may or may not be closable and lockable, wherein the transponder circuit consists of a relatively large coil (24) and a capacitor (26) tuned to or near the frequency of the identification and antitheft system which functions together with the identification labels (8) provided on the CDs (4) or DVDs (4), and wherein a portion (28) of this coil is arranged in the box at such a position opposite the identification label attached onto the CD or DVD packaged in the respective box (2), that in the transmitted field of a transmitting/receiving system a concentration of electromagnetic flux occurs in the area of this identification label provided on the CD (4) or DVD (4), so that the information in this identification label can be read in a noncontact manner over a greater distance with the aid of the radiofrequency transmitting/receiving system.

## Description

This invention relates to an assembly of at least one information carrier such as a CD or DVD and a box such as a CD or DVD box in which the at least one information carrier is received, the at least one information carrier being provided with an identification label comprising a coil, which identification label can be read out wirelessly with the aid of an electromagnetic field.

The invention further relates to a box such as a CD or DVD box for storing at least one information carrier in the form of a CD or DVD which is provided with an identification label comprising a coil, which identification label can be read out wirelessly with the aid of an electromagnetic field.

In addition, the invention relates to a transponder circuit.

Further, the invention relates to a library system provided with such an assembly.

Furthermore, the invention relates to a method for manufacturing a transponder of the assembly.

Such an assembly is known per se from Dutch patent application 1014540. Such an assembly is intended to be used in a lending service of a library, whereby the borrowers themselves take care of checking out and checking in the materials to be borrowed.

Dutch patent application no. 1014540 discloses *inter alia* a system in which, as a solution for closable CD (compact disk) and DVD (digital video disk) boxes, two radiofrequency identification labels are used. One first label is attached to the disk and a second label is arranged in the closable and lockable CD or DVD box. This second label is necessary to realize the antitheft function, because the dimension of the label which is attached onto the disk is too small to activate the antitheft detection system disposed at the exit of a library.

The noncontact radiofrequency identification labels can each be of a type as described in applicant's Dutch patent no. 176404, or a label based on the same principle, having a higher operating frequency, for instance of 13.56 MHz as described in the international standard ISO 15639. The labels according to this standard are provided with a so-called multi-label protocol which makes it possible for several labels in the field to be read out and/or programmed in succession. Because the noncontact electronic identification labels mentioned are programmable, so that they can comprise information which can be activated and deactivated, and also have a relatively great readout distance, also the antitheft function could be adopted-by these labels.

A disadvantage of the system known from Dutch patent application No. 1014540 is that it is difficult to use the identification label attached to the CD or DVD for an antitheft function at a relatively greater distance. To enable this antitheft function at a relatively greater distance, the assembly according to the Dutch patent application is provided with the second identification label, which is attached to the box.

The present invention provides a solution to this problem.

The assembly according to the invention is accordingly characterized in that the box is provided with a radiofrequency transponder circuit which is arranged to receive and re-transmit an electromagnetic field, the transponder circuit being provided with a coil greater than the coil of the identification label, and wherein a portion of the coil of the transponder circuit is arranged at the box, such that when the assembly is located in the electromagnetic field for reading out the identification label, the electromagnetic flux of the electromagnetic field for reading out the identification label is concentrated at the identification label of the at least one information carrier, so that the identification label can be read out in a noncontact manner at a greater distance from the assembly than in the absence of the transponder circuit.

As the electromagnetic flux of the electromagnetic interrogation field generated for reading out the identification label is concentrated at the identification label, the identification label can be read out at a greater distance than in the absence of the transponder. As a consequence, it has been made possible to further use this identification label in an antitheft system whereby it is required that the signal transmitted by the identification label be perceptible at a relatively great distance. A further advantage is that a transponder can generally be made cheaper than a second identification label such as it is used in the known system.

The box according to the invention is characterized in that the box is provided with a radiofrequency transponder circuit which is arranged to receive and re-transmit an electromagnetic field, the transponder circuit being provided with a coil greater than a central surface of a standard CD or DVD which is not intended for storage of digital information, and wherein a portion of the coil of the transponder circuit is arranged at the box, such that when, in use, the box is filled with the information carrier, and the assembly of box and information carrier is located in the electromagnetic field for reading out the identification label, the electromagnetic flux of the electromagnetic field for reading out the identification label is concentrated at the central area of the at least one information carrier, so that the identification label can be read out at a greater distance from the assembly than in the absence of the transponder circuit.

The transponder according to the invention is characterized in that the transponder circuit is arranged to be attached to a box such as a CD or DVD box for storing at least one information carrier in the form of a CD or DVD which is provided with an identification label which can be read out wirelessly with the aid of an electromagnetic field, the radiofrequency transponder circuit being arranged to receive and re-transmit an electromagnetic field, the transponder circuit being provided with a coil greater than a central surface of a standard CD or DVD which is not intended for storage of digital information, and wherein a portion of the coil of the transponder circuit is adapted such that it can be arranged at the box, such that when, in use, the box is filled with the information carrier, and the assembly formed by the information carrier and the box is located in the electromagnetic field for reading out the identification label, the electromagnetic flux of the electromagnetic field for reading out the identification label is concentrated at the central area of the at least one information carrier, so that the identification label can be read out at a greater distance from the assembly than in the absence of the transponder circuit.

The library system according to the invention is characterized in that it is further provided with at least one reader for generating the electromagnetic field for reading out an identification code from the at least one identification label of the assembly. In particular, it holds here that the identification label is further arranged as an antitheft label capable of being activated and deactivated, the library system being further provided with an antitheft system for radiating an electromagnetic surveillance field at, for instance, an exit of a library, whereby the antitheft system generates an alarm signal when the identification label passes the electromagnetic surveillance field while the identification label is activated, and the antitheft system does not generate an alarm signal when the identification label passes the electromagnetic surveillance field while the identification label is deactivated. Preferably, it holds here that a frequency of the electromagnetic field for reading out an identification code from the at least one identification label of the assembly is equal to a frequency of the surveillance field .

The method for manufacturing a transponder of the assembly is characterized in that the coil of the transponder circuit is formed by etching it from a plastic foil provided with a metal foil, wherein the capacitor of the transponder circuit is attached in the form of an SMD (surface mounted device) to the coil formed with the aid of the etching process, or wherein the capacitor is likewise manufactured through an etching process.

The invention will presently be further elucidated with reference to the drawing, wherein:
Fig. 1 shows a possible embodiment of an assembly according to the invention, which assembly comprises a box and a transponder according to the invention; and
Fig. 2 shows a possible embodiment of a library system according to the invention.

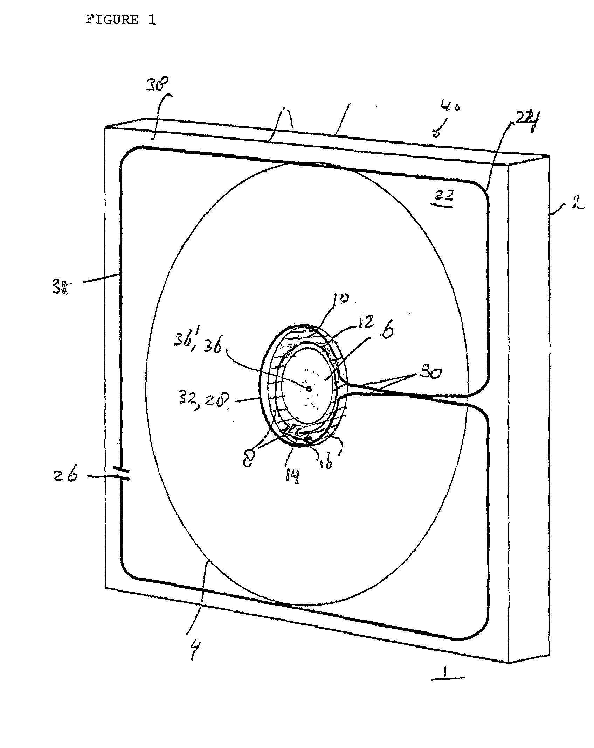

In Fig. 1, with reference character 1, an assembly according to the invention is designated. The assembly 1 is provided with a CD or DVD box 2, which may or may not be closable and lockable, for instance such as described in Dutch patent application 1014540. Contained in this box is (as a standard item in this example) an information carrier 4 in the form of a CD or DVD, on which, around a central opening 6 of the CD or DVD, an identification label 8 is provided. The identification label 8 is arranged in an area 10 (hatched in the drawing) of the CD or DVD that is not intended for bearing laser-readable digital information. The identification label 8 concerns a label known per se, as described, for instance, in Dutch patent 176404. Other labels are also conceivable, such as a label, based on the same principle, having a higher operating frequency, for instance of 13.56 MHz as described in the international standard ISO-15639. The labels according to this standard are provided with a so-called multi-label protocol which makes it possible for several labels in the field to be read out and/or programmed in succession. As the noncontact electronic identification labels mentioned are programmable, so that they can comprise information capable of being activated and deactivated, and also have a relatively great readout distance, these labels could also adopt the antitheft function.

The label 8 can be provided with a resonant circuit which is provided with a coil 12 and a capacitor 14. Further, the label can be provided with a programmable chip 16 coupled with the resonant circuit, which chip 16, in this example, comprises at least one readable identification code. The coil 12 extends in the area 10. The chip 16 and the capacitor 14 are likewise situated in the area 10.

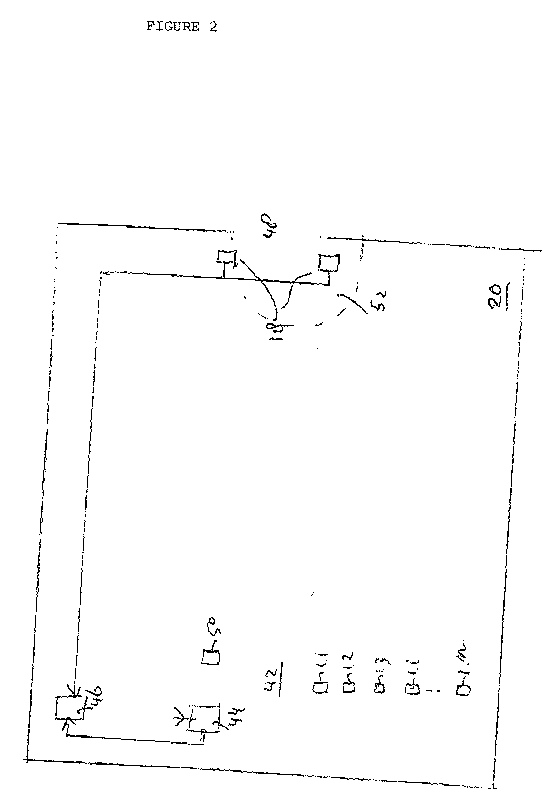

The identification label 8 in this example is tuned to a resonance frequency F0. When the identification label is brought within an electromagnetic field having the frequency F0, the identification label will respond thereto. In this example, the identification label can respond by transmitting the identification code stored in the chip 16. The identification label 8 in this example further provides for an antitheft function which can be activated and deactivated and thus forms part of a noncontact radiofrequency antitheft system. An antitheft gate 18 of this antitheft system can be disposed, for instance, at the exit of a library 20 (Fig. 2).

The identification label 8 in this example is designed to be programmable, in a manner known per se. Programming the chip 16 can be effected, for instance, wirelessly with the aid of an electromagnetic field which is radiated with the frequency F0 and which is modulated with a program code. Thus, for instance, the identification label can be programmed in order that the antitheft function be activated. If the identification label has been activated and subsequently is brought into an electromagnetic field having, in this example, a frequency F0, the label will respond, for instance, by radiating a code indicating that the label has been activated. When this code is received by an antitheft system, an alarm can be generated. When the identification label has been deactivated, it will not transmit this code, or transmit another code, indicating that the label has been deactivated. In that case, no alarm is generated. All the same, at the same time the identification code mentioned can be transmitted.

In the box, further, a radiofrequency transponder circuit 22 is arranged, which in this example consists of a relatively large coil 24 and a capacitor 26. A portion 28 of the coil 24 is arranged in the box substantially concentrically opposite the identification label 8 on the CD or the DVD 4, this portion 28 having approximately the same dimensions as the identification label 8 on the disk 4. The coil portion 28 forms part of the total coil 24 via the mutually close connections 30. The total coil 24, which in this example may consist of only one turn, and the capacitor 26 jointly form a resonant circuit, which is tuned to, or near, the carrier frequency F0 of the identification system of, for instance, 13.56 MHz, on which the identification label 8 functions.

If the CD or DVD box 2 provided with the above-described transponder circuit 22 enters the radiofrequency surveillance field of the antitheft system 18 belonging to a library system, the electromagnetic surveillance field received with the aid of coil 24 will to some extent be concentrated in the coil portion 28, giving rise to a greater flux density in this coil portion, so that the information stored in the identification label provided on the CD or DVD disk can be transferred over a greater distance to the antitheft system. The signals coming from the label 8 provided on the CD or DVD 4 are transferred via the transponder circuit 22 to the noncontact radiofrequency antitheft system 18. In this way, no separate identification label needs to be provided in the box.

The major advantage of this solution is that immediately a coupling is effected between the presence of the CD or DVD in the box and the antitheft function, which can now be provided directly by the label fitted on the CD or DVD. Further, the price of such a transponder circuit 22 is considerably lower than the price of an identification label, so that an economic advantage can be gained as well.

The transponder circuit in this example, therefore, is designed as a passive transponder. The coil and the capacitor of the transponder in combination are tuned to, or near, a frequency of the electromagnetic field with which the label can be read out and/or the resonance frequency of the identification label.

The portion 28 of the coil 24 is provided in such a position at the box opposite the coil 12 of the identification label, that the electromagnetic flux. of the electromagnetic field is concentrated at the coil 12 of the identification label of the information carrier 4. The coil 24 of the transponder is provided with at least one first loop 31 and at least one second loop 32, the first loop 31 enclosing a greater surface than does the second loop 32. The second loop 32 is arranged opposite the coil 12 of the identification label 8. The second loop 32 constitutes the earlier-mentioned part 28 of the coil 24. The first loop 31 and the second loop 32 are connected with each other via the connections 30. When a current flows through the first loop 31 in, for instance, an anti-clockwise direction, then also a current flows through the second loop 32 in the anti-clockwise direction. The first loop 31 thus receives an electromagnetic signal which in turn is transmitted, with the same phase, to the second loop 32 and vice versa. The effect is that in the transponder circuit 22 an electromagnetic flux which is enclosed (received). by the first loop 31, concentrates in an area which is enclosed by the second loop 32, since the first loop encloses a greater surface than the second loop. As the second loop 32 is arranged opposite the coil 12 of the identification label 8, the electromagnetic field (for instance the surveillance field radiated by the antitheft system) is thus concentrated at the coil of the identification label. The coil of the identification label in this example is approximately as large as the second loop. Further, the coil of the identification label is situated opposite the second loop. Further, it holds in this example that the coil of the identification label is arranged around a center 36 and also around the central opening 6 of the information carrier 4. The first loop 31 is approximately as large as one of the outer surfaces 38 of the box 2. The coil 24 of the transponder circuit in this example comprises only one turn. However, the coil can also comprise several turns. Also, it holds in this example that the second loop 32 extends around the center 6' of the front 38 or back 40 of the box. Furthermore, it holds that the first loop 31 extends substantially along a circumferential edge 39 of a front 18 or a back 40 of the box. The surface described by the first loop 31 is approximately as large as the surface of the front 38 or back 40 of the box, so that the assembly receives a largest possible part of a radiated electromagnetic field.

An application of the assembly according to Fig. 1 in a library system is presently described with reference to Fig. 2. In Fig. 2, reference numeral 42 designates a library system according to the invention of the library 20. The library system 42 is provided with a number of assemblies 1ᵢ (ᵢ = 1, 2, ... n) of a kind which has been described with reference to Fig. 1. Further, the library system 42 is provided with a reader 44 which in this example is arranged as a check-in or check-out terminal of the library system 42. The reader 42 is connected with a central computer 46. Further, the system comprises an antitheft gate 18, known per se, which is disposed adjacent an exit 48 of the library 20. The antitheft gate 18 is likewise connected with the central computer 46 and, in combination with the central computer, constitutes an antitheft system, known per se.

The operation of the library system 42 is as follows. A user who wishes to borrow, for instance, the assembly 1.2, proceeds with the assembly 1.2 to the reader 44. First of all, he presents, for instance, his library pass 50 to the reader 44. This library pass 50 can be provided, for instance, with a bar code containing identification information of the user. This bar code, in a manner known per se, can be read out in an automatic manner by the reader 44, which to that end is provided with a bar code reader. It is also possible that the library pass 50 is provided with an identification label of a kind corresponding to the identification label 8. This identification label of the library pass 50 then also comprises identification information of the user. The reader 44 to that end generates an electromagnetic (interrogation) field to which the identification label of the library pass 50 responds by radiating an identification code. The identification code received by the reader 44 is passed on to the computer 46. Next, the user presents the assembly 1.2. The assembly 1.2 is thus likewise brought into the electromagnetic (interrogation) field generated by the reader 44. This interrogation field is concentrated by the transponder circuit 22 at the identification label 8 of the CD or DVD of the assembly as described hereinabove. The identification label responds to that by transmitting an identification code comprising information about the CD or DVD to be lent. The reader 44, in combination with the identification label 8, can be designed in a manner known per se as an absorption system or a transmission system. In the case of a transmission system, in this example, the electromagnetic signal transmitted by the identification label 8 in response to a reception from the electromagnetic interrogation field radiated by the reader 44, will be transmitted via the transponder circuit 22 to the reader 44. In that example, the transponder circuit therefore provides that on one side the electromagnetic interrogation field is concentrated at the coil of the identification label 4. As the identification label 8 extracts its energy from the interrogation field, it is irradiated with a relatively higher power and will therefore respond with an electromagnetic signal having a relatively higher power. This electromagnetic signal is then transmitted via the transponder circuit to the reader 44. The reader 44 will receive this transmitted electromagnetic signal, also concentrated. The thus received identification code is also passed on to the computer 46. In the case of an absorption system, the reader 44 detects the energy absorbed by the identification label from the interrogation field. This energy absorption is modulated with the identification code mentioned. Because the electromagnetic interrogation field is concentrated at the identification label, relatively much energy will be detected from the interrogation field, which enables a proper detection by the reader of the transmitted identification code. The computer 46 proceeds to record that the respective CD or DVD has been borrowed by the respective user. Thereupon, the computer 46 causes the reader 44 to generate an electromagnetic field with a programming code. This programming code is received by the identification label 8 entirely analogously, as described earlier, and causes an antitheft function of the identification label to be deactivated. This means, for instance, that the identification label 8 does not generate a theft code or a code other than a theft code when it is introduced into an electromagnetic field having a frequency to which the identification label 8 can respond. When the user proceeds to leave the library 20 via the exit 48, this means that the assembly 2.2 is introduced into an electromagnetic surveillance field which is generated by the antitheft gate 18 in an area 52 at the exit. In this example, the electromagnetic surveillance field that is generated by the antitheft gate 18 has the same frequency as the interrogation field generated by the reader 44. The identification label 8 in this example, in response to the surveillance field of the antitheft gate, will radiate a code indicating that the antitheft function of the identification label 8 has been deactivated, or not radiate any code at all.

When the antitheft function of the identification label 8 of the assembly 1.2 has not been deactivated, the identification label 8 will radiate the antitheft code mentioned when it is introduced into the interrogation field of the antitheft gate 18. The antitheft gate 18 can thereupon cause an alarm to go off in an automatic manner. Also, it may be that the antitheft gate 18 at the same time reads the identification code of the identification label 8 of the assembly 1.2 and passes it on to the computer 46. Should a user still succeed in leaving the library 20, it can be checked which CD or DVD has been stolen. The antitheft gate 18 reading out the antitheft code and the code optionally indicating that the label 8 has been deactivated, proceeds, through the intermediacy of the transponder circuit 22, in a manner entirely analogous to that as described earlier for reading out of the identification code by the reader 44. By virtue of the transponder circuit 22, the label 8 can be read out over a large distance. This has as an advantage that the gate 18 can be made of wide design.

In this way, a user can borrow a CD or DVD in a fully automatic manner, without intervention of library personnel. When some time later he comes to return the assembly 1.2, he reports again at the reader 44. The reader 44 may, for instance, be further provided with a kind of letterbox in which the assembly 1.2 can be deposited. In the letterbox, as described earlier, the identification code of the identification label 8 can be read out. This code can subsequently be passed on to the central computer 46, so that it can thereupon be recorded that the respective assembly 1.2 has been handed in again. Also, at the same time, in an automatic manner, the antitheft function of the identification label 8 can be activated.

The invention is not limited in any way to the embodiments outlined above. For instance, the identification code of the identification labels 8 can also be read out with the aid of the reader 44 when the CD or DVD 4 is not in the box 2. In fact, the information between the reader 44 and the identification label 8 is exchanged at a relatively shorter distance, which is possible without the intermediacy of the transponder circuit 22.

In this example, the coil and the capacitor of the transponder are in combination tuned to or near a frequency of the electromagnetic surveillance field . However, the electromagnetic surveillance field can also comprise a broader frequency spectrum. What will still apply in that example, however, is that the coil and the capacitor of the transponder in combination are tuned to or near a receiving frequency of the identification label. What is involved in this example, accordingly, is a resonance frequency of the identification label.

It is additionally possible that the identification label, in a manner known per se, is provided with a number of resonance frequencies (receiving frequencies). A first resonance frequency can be tuned, for instance, to the electromagnetic field radiated by the reader 44. A second resonance frequency can be tuned to the electromagnetic field radiated by the antitheft gate 18. The coil and the capacitor of the transponder are then tuned in any case to the second resonance frequency which is utilized by the antitheft gate 18. In fact, it is precisely at this resonance frequency that detection of the identification label 8 should be able to take place at a greater distance because the exit 48 of the library is, after all, relatively large. Accordingly, the area 50 within which it should be possible for the identification label to be detected is greater than an area around the reader 44 on which it should be possible for the identification label 8 to be read out and/or programmed.

The signals coming from the label provided on the CD or DVD are transferred via the transponder circuit to the noncontact radiofrequency antitheft gate 18. If the first resonance frequency is not a resonance frequency of the transponder circuit, the identification label 8 can nonetheless be read out by the reader 44 because here reading out the identification label takes place at a smaller distance. The transponder circuit then does not assist in the wireless communication between the reader 44 and the identification label 8.

In this example, the transponder circuit is designed as a passive transponder without a supply circuit. However, active transponders are also an option. Also conceivable are active labels.

The transponder circuit according to the invention can be realized by etching it from a plastic foil provided with a metal foil. The necessary capacitor can also be formed in a known manner with the aid of this technique if the plastic foil mentioned is provided with a metal foil on two sides. The capacitor can also consist of an SMD (surface mounted device) which is soldered to the coil formed from metal foil, or is glued thereto with the aid of electroconductive glue. If the plastic foil mentioned is provided with a layer of glue and optionally printed, it can be stuck in the closable CD or DVD box in the form of a sticker and in this manner be concealed from view.

The coil, and optionally the capacitor, can be formed not only with the aid of etching technique, but also by electrochemically growing metal, for instance copper, on an impression of this coil made with the aid of conductive ink. Also applicable is exclusively printable ink, for instance in the form of silver paste, but the impedance of a circuit formed in this manner is higher, so that a lesser range can be achieved.

For the sake of completeness, it is noted that information carrier is here understood to include specific forms of CDs and DVDs, such as CD-ROMs, photo CDs, super audio CDs, CD recordables, CD re-recordables, etc. Also, the assembly can consist of a box in which more than one CD or DVD is received. Also, the invention could be used in an assembly where the information carrier consists of a video tape and the box consists of a packaging box of a video tape. Such variants are each understood to fall within the scope of the invention.

## Claims

1. An assembly of at least one information carrier such as a CD or DVD and a box such as a CD or DVD box in which the at least one information carrier is received, the at least one information carrier being provided with an identification label comprising a coil, which identification label can be read out wirelessly with the aid of an electromagnetic field, **characterized in that** the box is provided with a radiofrequency transponder circuit which is arranged to receive and re-transmit an electromagnetic field, the transponder circuit being provided with a coil greater than the coil of the identification label, and wherein a portion of the coil of the transponder circuit is arranged at the box, such that when the assembly is located in the electromagnetic field for reading out the identification label, the electromagnetic flux of the electromagnetic field for reading out the identification label is concentrated at the identification label of the at least one information carrier, so that the identification label can be read out in a noncontact manner at a greater distance from the assembly than in the absence of the transponder circuit.

2. An assembly according to claim 1, **characterized in that** the transponder circuit is designed as a passive transponder circuit.

3. An assembly according to any one of the preceding claims, **characterized in that** the identification label is designed as a passive identification label.

4. An assembly according to any one of the preceding claims, **characterized in that** the identification label is further arranged as an antitheft label capable of being activated and deactivated.

5. An assembly according to any one of the preceding claims, **characterized in that** the transponder circuit is further provided with at least one capacitor, while the coil and the capacitor of the transponder circuit in combination are tuned to or near a frequency of the electromagnetic field and/or a receiving frequency of the identification label.

6. An assembly according to claim 5, **characterized in that** the portion of the coil is arranged at the box at such a position opposite the coil of the identification label that the electromagnetic flux of the electromagnetic field is concentrated at the coil of the identification label of the at least one information carrier.

7. An assembly according to claim 6, **characterized in that** the coil of the transponder circuit is provided with at least one first loop and at least one second loop, the first loop enclosing a greater surface than the second loop, and the second loop being arranged opposite the coil of the identification label.

8. An assembly according to claims 6 and 7, **characterized in that** the coil of the identification label is approximately as large as the second loop.

9. An assembly according to claim 8, **characterized in that** the coil of the identification label is located opposite the second loop.

10. An assembly according to any one of the preceding claims 5-9, **characterized in that** the information carrier is of disk-shaped design, with the coil of the identification label arranged around a center of the disk-shaped information carrier.

11. An assembly according to claim 10, **characterized in that** the coil of the identification label is arranged around a central opening of the information carrier.

12. An assembly according to claim 10 or 11, **characterized in that** the first loop is approximately as large as one of the outer surfaces of the box.

13. An assembly according to any one of the preceding claims 5-12, **characterized in that** the coil of the transponder circuit comprises only one turn.

14. An assembly according to any one of claims 5-13, **characterized in that** the coil of the transponder circuit has been formed by etching it from a plastic foil provided with a metal foil, wherein the capacitor of the transponder circuit is attached in the form of an SMD (surface mounted device) to the coil formed with the aid of the etching process, or wherein the capacitor has also been manufactured by an etching process.

15. A transponder circuit according to claim 14, **characterized in that** the capacitor is attached in the form of an SMD to the coil formed with the aid of the etching process, with the aid of electroconductive glue or through soldering.

16. A transponder circuit according to claim 14, **characterized in that** the coil of the transponder circuit has been formed by etching it from a first side of a plastic foil which is provided on opposite sides with a metal foil, while the capacitor has been formed from the two-sided metal foil, whereby a capacitor surface on a second side of the plastic foil is connected with the coil through the plastic foil.

17. An assembly according to any one of claims 5-13, **characterized in that** the coil and optionally the capacitor are manufactured with the aid of an electrochemical growing process.

18. An assembly according to any one of the preceding claims 5-13, **characterized in that** the transponder circuit is manufactured with the aid of electrically conductive and printable ink, for instance in the form of a silver paste.

19. An assembly according to any one of the preceding claims 5-13, **characterized in that** the transponder circuit is manufactured in the form of a sticker, which may or may not be printed, which is stuck in or on the box.

20. A box such as a CD or DVD box for storing at least one information carrier in the form of a CD or DVD which is provided with an identification label comprising a coil, which identification label can be read out in a wireless manner with the aid of an electromagnetic field, **characterized in that** the box is provided with a radiofrequency transponder circuit which is arranged to receive and re-transmit an electromagnetic field, the transponder circuit being provided with a coil greater than a central surface of a standard CD or DVD which is not intended for storage of digital information, and wherein a portion of the coil of the transponder circuit is arranged at the box, such that when, in use, the box is filled with the information carrier, and the assembly of box and information carrier is located in the electromagnetic field for reading out the identification label, the electromagnetic flux of the electromagnetic field for reading out the identification label is concentrated at the central area of the at least one information carrier, so that the identification label can be read out at a greater distance from the assembly than in the absence of the transponder circuit.

21. A box according to claim 20, **characterized in that** the transponder circuit is designed as a passive transponder circuit.

22. An assembly according to any one of the preceding claims 20 or 21, **characterized in that** the transponder circuit is further provided with a capacitor, while the coil and the capacitor of the transponder circuit in combination are tuned to or near a receiving frequency of the identification label and/or a frequency of the electromagnetic field.

23. A box according to claim 22, **characterized in that**, in use, a portion of the coil of the transponder circuit is arranged in the box at such a position opposite the coil of the identification label that the electromagnetic flux of the electromagnetic field is concentrated at the coil of the identification label of the at least one information carrier.

24. A box according to any one of claims 22 or 23, **characterized in that** the coil of the transponder circuit is provided with at least one first loop and at least one second loop, the first loop enclosing a greater surface than the second loop.

25. A box according to claim 24, **characterized in that** the second loop extends around a center of a front or back of the box.

26. A box according to claim 24 or 25, **characterized in that** the first loop extends substantially along a circumferential edge of a front or back of the box.

27. A box according to any one of the preceding claims 22-26, **characterized in that** the coil of the transponder circuit comprises only one turn.

28. A box according to any one of the preceding claims 22-27, **characterized in that** the coil of the transponder circuit is formed by etching it from a plastic foil provided with a metal foil, wherein the capacitor of the transponder circuit is attached in the form of an SMD (surface mounted device) to the coil formed with the aid of the etching process, or wherein the capacitor is also manufactured by an etching process.

29. A box according to claim 28, **characterized in that** the capacitor is attached in the form of an SMD to the coil formed with the aid of the etching process, with the aid of electroconductive glue or by soldering.

30. A box according to claim 28, **characterized in that** the coil of the transponder circuit is formed by etching it from a first side of a plastic foil which is provided on opposite sides with a metal foil, wherein the capacitor is formed from the two-sided metal foil, wherein a capacitor surface on a second side of the plastic foil is connected with the coil through the plastic foil.

31. A box according to any one of claims 22-27, **characterized in that** the coil and optionally the capacitor are manufactured with the aid of an electrochemical growing process.

32. A box according to any one of the preceding claims 22-27, **characterized in that** the transponder circuit is manufactured with the aid of electrically conductive and printable ink, for instance in the form of a silver paste.

33. A box according to any one of the preceding claims 22-27, **characterized in that** the transponder circuit is manufactured in the form of a sticker, which may or may not be printed, which is stuck in or on the box.

34. A transponder circuit, **characterized in that** the transponder circuit is arranged to be attached to a box such as a CD or DVD box for storing at least one information carrier in the form of a CD or DVD which is provided with an identification label which can be read out wirelessly with the aid of an electromagnetic field, the radiofrequency transponder circuit being arranged to receive and re-transmit an electromagnetic field, the transponder circuit being provided with a coil greater than a central surface of a standard CD or DVD which is not intended for storage of digital information, and wherein a portion of the coil of the transponder circuit is designed such that it can be arranged at the box, such that when, in use, the box is filled with the information carrier, and the assembly formed by the information carrier and the box is located in the electromagnetic field for reading out the identification label, the electromagnetic flux of the electromagnetic field for reading out the identification label is concentrated at the central area of the at least one information carrier, so that the identification label can be read out at a greater distance from the assembly than in the absence of the transponder circuit.

35. A transponder circuit according to claim 34, **characterized in that** the transponder circuit is designed as a passive transponder circuit.

36. A transponder circuit according to any one of the preceding claims 34 or 35, **characterized in that** the transponder circuit is provided with at least one coil and at least one capacitor which in combination are tuned to or near a predetermined frequency.

37. A transponder circuit according to any one of claims 36, **characterized in that** the coil is provided with at least one first loop and at least one second loop, the first loop enclosing a greater surface than the second loop.

38. A transponder circuit according to any one of the preceding claims 36 or 37, **characterized in that** the coil of the transponder circuit comprises only one turn.

39. A transponder circuit according to any one of claims 36-38, **characterized in that** the coil of the transponder circuit is formed by etching it from a plastic foil provided with a metal foil, wherein the capacitor of the transponder circuit is attached in the form of an SMD (surface mounted device) to the coil formed with the aid of the etching process, or wherein the capacitor is also manufactured by an etching process.

40. A transponder circuit according to claim 39, **characterized in that** the capacitor is attached in the form of an SMD to the coil formed with the aid of the etching process, with the aid of electroconductive glue or by soldering.

41. A transponder circuit according to claim 39, **characterized in that** the coil of the transponder circuit is formed by etching it from a first side of a plastic foil which is provided on opposite sides with a metal foil, wherein the capacitor is formed from the two-sided metal foil, wherein a capacitor surface on a second side of the plastic foil is connected with the coil through the plastic foil.

42. A transponder circuit according to any one of claims 36-38, **characterized in that** the coil and optionally the capacitor are manufactured with the aid of an electrochemical growing process.

43. A transponder circuit according to any one of the preceding claims 36-38, **characterized in that** the transponder circuit is manufactured with the aid of electrically conductive and printable ink, for instance in the form of a silver paste.

44. A transponder circuit according to any one of the preceding claims 36-38, **characterized in that** the transponder circuit is manufactured in the form of a sticker, which may or may not be printed.

45. A library system provided with at least one assembly according to any one of the preceding claims 1-19, and at least one reader for generating the electromagnetic field for reading out an identification code from the at least one identification label of the assembly.

46. A library system according to claim 45, **characterized in that** the identification label is further arranged as an antitheft label capable of being activated and deactivated, the library system being further provided with an antitheft system for radiating an electromagnetic surveillance field at, for instance, an exit of a library, wherein the antitheft system generates an alarm signal when the identification label passes the electromagnetic surveillance field while the identification label is activated and the antitheft system does not generate an alarm signal when the identification label passes the electromagnetic surveillance field while the identification label is deactivated.

47. A library system according to claim 45 or 46, **characterized in that** a frequency of the electromagnetic field for reading out an identification code from at least one identification label of the assembly is equal to a frequency of the surveillance field .

48. A method for manufacturing a transponder circuit of the assembly according to any one of the preceding claims 5-13, **characterized in that** the, coil of the transponder circuit is formed by etching it from a plastic foil provided with a metal foil, while the capacitor of the transponder circuit is attached in the form of an SMD (surface mounted device) to the coil formed with the aid of the etching process, or wherein the capacitor is also manufactured through an etching process.

49. A method according to claim 48, **characterized in that** the capacitor is attached in the form of an SMD to the coil formed with the aid of the etching process, with the aid of electroconductive glue or by soldering.

50. A method according to claim 48, **characterized in that** the coil of the transponder circuit is formed by etching it from a first side of a plastic foil which is provided on opposite sides with a metal foil, wherein the capacitor is formed from the two-sided metal foil, while a capacitor surface on a second side of the plastic foil is connected with the coil through the plastic foil.

51. A method for manufacturing a transponder circuit of the assembly according to any one of claims 5-13, **characterized in that** the coil and optionally the capacitor are manufactured with the aid of an electrochemical growing process.

52. A method for manufacturing a transponder circuit of the assembly according to any one of claims 5-13, **characterized in that** the transponder circuit is manufactured with the aid of electrically conductive and printable ink, for instance in the form of a silver paste.

53. A method for manufacturing a transponder circuit of the assembly according to any one of claims 5-13, **characterized in that** the transponder circuit is manufactured in the form of a sticker, which may or may not be printed.

54. A transponder circuit for the purpose of a CD or DVD box which may or may not be closable and lockable, **characterized in that** the transponder circuit consists of a relatively large coil and a capacitor tuned to or near the frequency of the identification and antitheft system which functions together with the identification labels provided on the CDs or DVDs, and wherein a portion of this coil is arranged in the box at such a position opposite the identification label attached onto the CD or DVD packaged in the respective box, that in the transmitted field of a transmitting/receiving system a concentration of electromagnetic flux occurs in the area of this identification label provided on the CD or DVD, so that the information in this identification label can be read in a contactless manner over a greater distance with the aid of said radiofrequency transmitting/receiving system.

55. A transponder circuit for the purpose of a CD or DVD box according to claim 54, **characterized in that** the transponder circuit is formed by etching it from a plastic foil provided with a metal foil, while the capacitor in the form of an SMD is soldered to the coil formed with the aid of the etching process.

56. A transponder circuit for the purpose of a CD or DVD box according to claim 54, **characterized in that** the transponder circuit is formed by etching it from a plastic foil provided with a metal foil, while the capacitor, in the form of an SMD (surface mounted device), is glued to the coil formed with the aid of the etching process, with the aid of electroconductive glue.

57. A transponder circuit for the purpose of a CD or DVD box according to claim 54, **characterized in that** the transponder circuit is formed by etching it from a plastic foil which is provided on two sides with a metal foil, while the capacitor is formed from the two-sided metal foil, and the second capacitor surface is connected with the coil through the plastic foil.

58. A transponder circuit for the purpose of a CD or DVD box according to one or more of the preceding claims 54-57, **characterized in that** instead of etching technique, use is made of an electrochemical growing process.

59. A transponder circuit for the purpose of a CD or DVD box according to one or more of the preceding claims 54-58, **characterized in that** the transponder circuit is made with the aid of electrically conductive and printable ink, for instance in the form of a silver paste.

60. A transponder circuit for the purpose of a CD or DVD box according to one or more of the preceding claims 54-59, **characterized in that** the coil of the transponder circuit consists of only one turn.

61. A transponder circuit for the purpose of a CD or DVD box according to one or more of the preceding claims 54-60, **characterized in that** the transponder circuit is made in the form of a sticker, which may or may not be printed, which can be stuck in the CD or DVD box.
